# EUROPÄISCHE PATENTSCHRIFT

(11) **EP 2 504 589 B1**
(45) Veröffentlichungstag und Bekanntmachung des Hinweises auf die Patenterteilung: **04.06.2014**
(21) Anmeldenummer: 10773008.7
(22) Anmeldetag: 14.10.2010
(51) Int. Cl.: F16C 13/02, F16C 23/10, B41F 13/28

(54) **POSITIONIERBARE DRUCKMASCHINENLAGERUNG**
ADJUSTABLE BEARING OF A PRINTING MACHINE
PALIER RÉGLABLE D'UNE MACHINE À IMPRIMER

(30) Priorität: 24.11.2009 DE 102009055656
(43) Veröffentlichungstag der Anmeldung: 03.10.2012
(73) Patentinhaber: Schaeffler Technologies GmbH & Co. KG, 91074 Herzogenaurach (DE)
(72) Erfinder: DITTENHÖFER, Thomas, 97519 Humprechtshausen (DE); HAASLER, Markus, 01662 Meißen (DE); FRÜHWALD, Andreas, 91460 Baudenbach (DE)
(86) Internationale Anmeldenummer: PCT/EP2010/065407
(87) Internationale Veröffentlichungsnummer: WO 2011/064043

(56) Entgegenhaltungen:
- EP-A1- 1 342 570
- DE-A1- 4 019 561
- DE-C- 465 247
- FR-A- 702 922
- GB-A- 578 833
- JP-A- 8 021 517
- JP-A- 56 021 171

## Beschreibung

### Gebiet der Erfindung

Die Erfindung bezieht sich auf eine Zapfenwälzlagerung, bei der Wälzkörper auf einem Zapfen eines Zylinders einer Druckmaschine, oder unter Zwischenschaltung eines Innenrings auf diesem festgelegt sind, wobei die Wälzkörper mit einem Außenring oder unter Zwischenschaltung eines ebenfalls wälzgelagerten und exzentrisch ausgeführten Zwischenrings mit dem Außenring mit oder ohne Einfügung eines Lageraußenringes in Wirkverbindung stehen, wobei der Außenring einen Flansch aufweist und damit mit einer Maschinenseitenwand in Kontakt steht, wobei der Flansch Bohrungen für Schrauben zur kraftschlüssigen Verbindung des Flansches mit der Maschinenseitenwand aufweist, die gegenüber den Schrauben Einstellspiele aufweisen.

### Hintergrund der Erfindung

Eine Zapfenwälzlagerung ist aus der DE 1 400 319 A bekannt. Bei dieser Zapfenwälzlagerung ist ein wälzgelagerter Zwischenring vorgesehen, an dem ein Hebel befestigt ist, der zur Verstellung des Druckzylinders vorgesehen ist, wobei bei Verstellung eine Berührung eines Plattenzylinders mit einem Druckzylinder vorgenommen wird bzw. die Berührung aufgehoben wird. Um das äußere Lager des Zwischenrings ist ein Außenring vorgesehen, der ebenfalls exzentrisch ausgeführt und mit einem Hebel verbunden ist. Die Verstellung dieses Hebels dient der Positionierung der Lagerung und damit des Zylinders der Druckmaschine, um eine exakte Ausrichtung zu erzielen.

Der Aufwand, mit der das Positionieren des Zylinders der Druckmaschine erfolgt, ist sehr groß und kostspielig, da sowohl eine exakte Lagerung des Außenringes in Bezug auf den Lageraußenring als auch in der Maschinenseitenwand erforderlich ist und darüber hinaus ein Verstellmechanismus für den Hebelarm erforderlich ist.

Aus der gattungsbildenden JP 56 021171 A ist eine Positionierung des Zylinders einer Druckmaschine bekannt, bei der ein Außenring exzentrisch ausgeführt und in einer Maschinenseitenwand mit seinem Außenumfang geführt ist. Der Außenring weist einen Flansch auf, der mittels Schrauben an einer Maschinenseitenwand befestigbar ist, wobei Bohrungen für die Schrauben im Flansch ein Einstellspiel aufweisen. Durch Verdrehen des Außenringes in der Maschinenseitenwand über die Exzentrizität des Außenringes erfolgt die Positionierung des Zylinders, die durch Anziehen der Schrauben fixiert wird.

### Aufgabe der Erfindung

Aufgabe der Erfindung ist es daher, die gattungsbildende Zapfenwälzlagerung so zu verbessern, dass, abgesehen von einer ggf. erforderlichen Verstellung des Zylinders der Druckmaschine, die Positionierung und Ausrichtung des Lagerzapfens und damit des Zylinders der Druckmaschine mit einfachen Mitteln erfolgen kann, wobei eine sehr genaue, präzise Positionierung möglich sein soll.

### Beschreibung der Erfindung

Die Aufgabe der Erfindung wird dadurch gelöst, dass der Außenring zylindrisch ausgeführt ist, dass der Außenring oder der Flansch gegenüber der Öffnung in der Maschinenseitenwand Einstellspiele aufweisen und dass Verstellelemente vorgesehen sind, die zumindest einen Exzenterbolzen aufweisen, der einerseits mit Bohrungen in der Maschinenseitenwand und andererseits mit Aussparungen im Flansch des Außenringes in Wirkverbindung steht und dass zumindest ein Passbolzen vorgesehen ist, der in Passbohrungen des Flansches und der Maschinenseitenwand angeordnet ist. Alternativ zu diesem Vorschlag sind zwei Exzenterbolzen vorgesehen.

Unabhängig davon, ob ein Zwischenring mit entsprechenden Lagerungen vorgesehen ist oder nicht, werden durch die Verstellelemente der Außenring in der Maschinenseitenwand soweit verstellt und ausgerichtet, das anschließend über die Schrauben eine endgültige Festlegung des Außenringes in der Seitenwand erfolgt. Die Verstellelemente weisen dabei Exzenterbolzen auf, die einerseits mit Bohrungen mit der Maschinenseitenwand und andererseits mit Aussparungen im Flansch des Außenringes in Wirkverbindung stehen. Durch Verdrehen des oder der Exzenterbolzen kann daher eine exakte feinfühlige Verschiebung und Positionierung des Außenringes in der Maschinenseitenwand erfolgen. Um eine hinreichende Verstellung zu ermöglichen, ist daher in den Bohrungen für die Schrauben sowie auch zwischen dem Außenring und der Maschinenseitenwand sowie zwischen dem Flansch und der Maschinenseitenwand so viel Spiel vorgesehen, dass eine hinreichende Verstellung möglich ist.

In vorteilhafter Ausgestaltung der Erfindung sind weiterhin Passbolzen vorgesehen, die in Passbohrungen des Flansches und der Maschinenseitenwand angeordnet sind. Ist beispielsweise nur ein Exzenterbolzen vorgesehen, so ist es zweckmäßig, wenn auf der gegenüberliegenden Seite des Flansches ein Passbolzen vorgesehen ist. Dadurch ist eine leichte Verstellung des Zapfenwälzlagers bzw. des Zapfens des Zylinders der Druckmaschine als eine Schwenkbewegung um den Passbolzen möglich. Ist der Passbolzen als Exzenterpassbolzen ausgebildet, so ist durch eine Verdrehung des Exzenterpassbolzens auch eine Verschiebung in einer zweiten Bewegungsrichtung möglich.

In einer weiteren Ausgestaltung der Erfindung wird vorgeschlagen, dass zwei Exzenterbolzen vorgesehen sind, die um ca. 90° Winkel versetzt auf dem Flansch angeordnet sind. Durch Verdrehung dieser Exzenterbolzen ist daher eine Verstellung des Außenringes bzw. des Zylinders der Druckmaschine in alle Bewegungsrichtungen möglich, so dass die ideale Zylinderposition durch Verdrehen der Exzenterbolzen möglich ist. Zusätzlich können dabei die so gefundenen Positionen durch Kegel-Passstifte fixiert werden.

Durch die DE 40 19 561 A1 ist es zwar bekannt, einen Lagerflansch mittels einer Exzenterschraube auszurichten. Diese Ausrichtung erfolgt allerdings nur in einer, nämlich der vertikalen Richtung, während die horizontale Ausrichtung mittels außen am Lagerflansch angreifenden Stellschrauben erfolgt. Es erfolgt also kein Verschwenken um einen Passbolzen oder einen weiteren Exzenterbolzen. Diese Ausrichtung ist darüber hinaus zum Einstellen eines Lagerflansches der Welle eines Kran-Laufrades vorgesehen, sodass sie sich auf das Positionieren von Zylindern am Druckmaschinen fremden Fachgebiet bezieht.

### Kurze Beschreibung der Zeichnungen

Zur weiteren Erläuterung der Erfindung wird auf die beiliegenden Zeichnungen verwiesen, in denen Ausführungsbeispiele der Erfindung vereinfacht dargestellt sind. Dabei zeigen:
- Figur 1: einen Schnitt durch eine Zapfenwälzlagerung, bei der der Außenring über Wälzkörper den Zapfen des Zylinders trägt;
- Figur 2: einen Schnitt durch eine Zapfenwälzlagerung, bei der ein Zwischenring vorgesehen ist;
- Figur 3: einen Ausschnitt einer Exzenterbolzenanordnung in vergrößertem Maßstab;
- Figur 4: eine Seitenansicht einer Zapfenwälzlagerung mit Zwischenring und einem Exzenterbolzen;
- Figur 5: eine Seitenansicht einer Zapfenwälzlagerung mit zwei Exzenterbolzen.

### Ausführliche Beschreibung der Zeichnungen

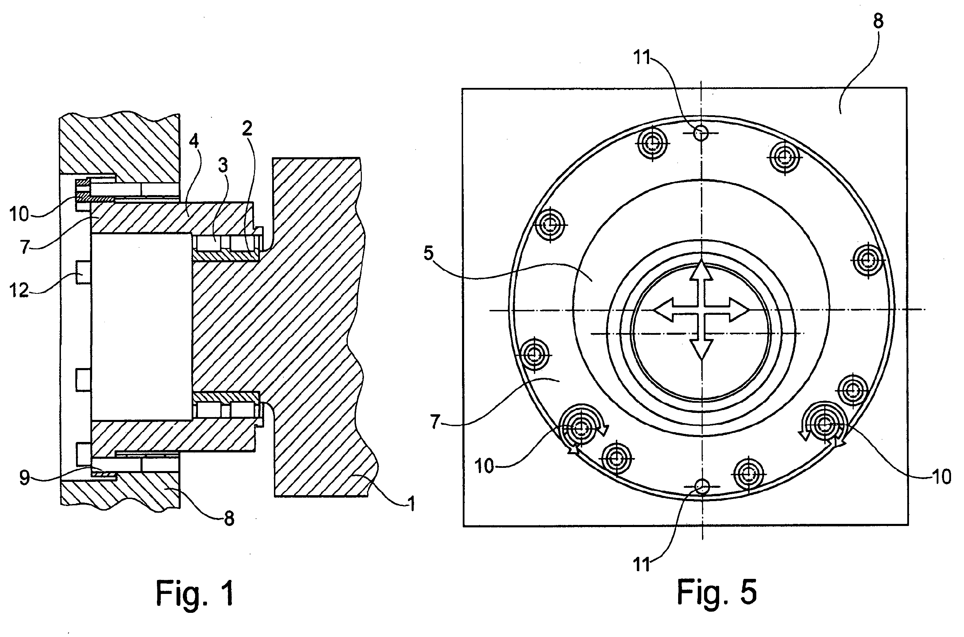

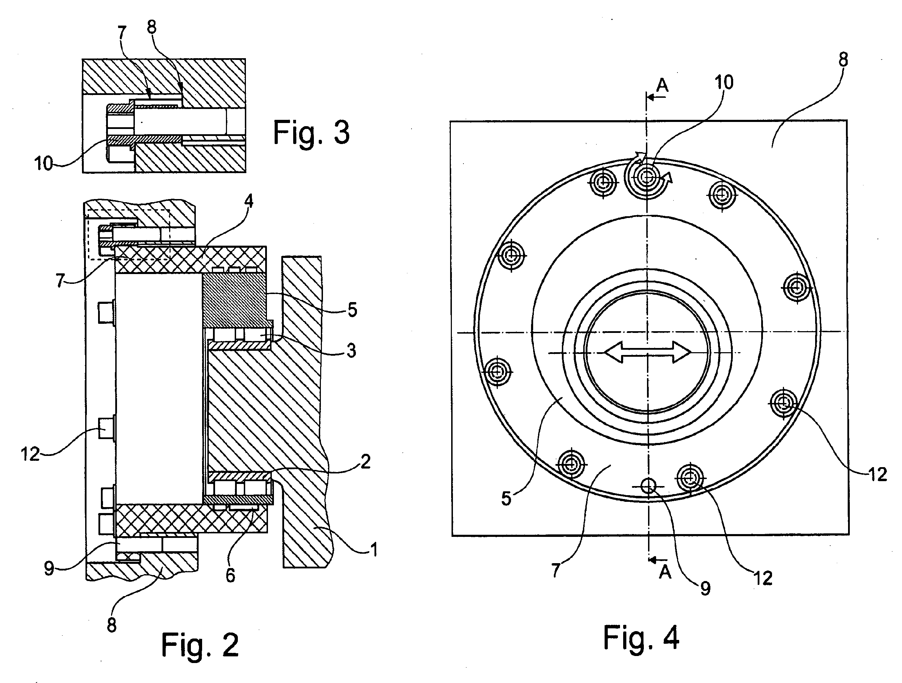

In den Figuren 1 bis 5 ist, soweit im Einzelnen dargestellt, mit 1 der Zylinder einer Druckmaschine bezeichnet, auf dessen Zapfen ein Innenring 2 gelagert ist, an den sich nach außen Wälzkörper 3 anschließen. Die Wälzkörper 3 sind, wie in Figur 1 dargestellt, von einem Außenring 4 gestützt, der gleichzeitig die Funktion des Außenlagerringes übernimmt. In Figur 2 sind die Wälzkörper 3 von einem Zwischenring 5 abgestützt, der seinerseits über Wälzkörper 6 am Außenring 4 abgestützt ist.

Es sei ausdrücklich darauf hingewiesen, dass die Wälzkörper 3 und 6 auch unter Zwischenschaltung eines Lagerrings im Außenring 4 bzw. im Zwischenring 5 gelagert sein können.

Der Außenring 4 weist einen Flansch 7 auf, in dem Bohrungen zur Aufnahme von Schrauben 12 vorgesehen sind, die zur Verspannung des Flansches 7 mit einer Maschinenseitenwand 8 vorgesehen sind. Weiterhin sind in den Flanschen 7 und in der Maschinenseitenwand 8 Passbohrungen vorgesehen, in denen Passbolzen 9 (siehe Figuren 1, 2 und 4) eingesetzt sind. Weiterhin ist in den Figuren 1, 2 und 4 auf der gegenüberliegenden Seite des Passbolzens 9 im Flansch 7 und der Maschinenseitenwand 8 Bohrungen vorgesehen, in denen ein Exzenterbolzen 10 eingesetzt ist. Befindet sich auf der dem Exzenterbolzen 10 gegenüberliegenden Seite zwischen Flansch 7 und Maschinenseitenwand 8 ein Passbolzen (siehe Figur 4), so muss die Bohrung im Flansch 7 um den Exzenterbolzen 10 herum zumindest in Richtung zu dem Passbolzen so viel Spiel aufweisen, dass eine Verdrehung des Exzenterbolzens 10 möglich ist und eine Schwenkbewegung des Außenringes 4 um den Passbolzen 9 erfolgen kann.

Es können aber auch (siehe Figur 5) zwei Exzenterbolzen zwischen Flansch 7 und Maschinenseitenwand 8 vorgesehen sein, die vorzugsweise um einen Winkel von 90° zueinander versetzt sind. Dann ist durch geeignete Drehung der Exzenterbolzen eine freie Einstellmöglichkeit des Flansches 7 in der Maschinenseitenwand 8 in allen Bewegungsrichtungen möglich. In diesem Ausführungsbeispiel kann dann eine Fixierung des Flansches 7 in der Maschinenseitenwand 8 durch Kegel-Passstifte 11 erfolgen.

### Bezugszahlenliste

- 1: Zylinder
- 2: Innenring
- 3: Wälzkörper
- 4: Außenring
- 5: Zwischenring
- 6: Wälzkörper
- 7: Flansch
- 8: Maschinenseitenwand
- 9: Passbolzen
- 10: Exzenterbolzen
- 11: Kegel-Passstifte
- 12: Schrauben

## Patentansprüche

1. Zapfenwälzlagerung, bei der Wälzkörper (3) auf einem Zapfen eines Zylinders (1) einer Druckmaschine, oder unter Zwischenschaltung eines Innenrings (2) auf diesem festgelegt sind, wobei die Wälzkörper (3) mit einem Außenring (4) oder unter Zwischenschaltung eines ebenfalls wälzgelagerten und exzentrisch ausgeführten Zwischenrings (5) mit dem Außenring (4) mit oder ohne Einfügung eines Lageraußenringes in Wirkverbindung stehen, wobei der Außenring (4) einen Flansch (7) aufweist und damit mit einer Maschinenseitenwand (8) in Kontakt steht, wobei der Flansch (7) Bohrungen für Schrauben (12) zur kraftschlüssigen Verbindung des Flansches (7) mit der Maschinenseitenwand (8) aufweist, die gegenüber den Schrauben (12) Einstellspiele aufweisen, **dadurch gekennzeichnet, dass** der Außenring (4) zylindrisch ausgeführt ist, dass der Außenring (4) oder der Flansch (7) gegenüber der Öffnung in der Maschinenseitenwand (8) Einstellspiele aufweisen und dass Verstellelemente vorgesehen sind, die zumindest einen Exzenterbolzen (10) aufweisen, der einerseits mit Bohrungen in der Maschinenseitenwand (8) und andererseits mit Aussparungen im Flansch (7) des Außenringes (4) in Wirkverbindung steht und dass zumindest ein Passbolzen (9) vorgesehen ist, der in Passbohrungen des Flansches (7) und der Maschinenseitenwand (8) angeordnet ist.

2. Zapfenwälzlagerung nach Anspruch 1, **dadurch gekennzeichnet, dass** die Passbolzen (9) als Exzenterpassbolzen ausgebildet sind, die mit entsprechenden Passbohrungen im Flansch (7) und in der Maschinenseitenwand (8) in Wirkverbindung stehen.

3. Zapfenwälzlagerung nach einem der vorhergehenden Ansprüche, **dadurch gekennzeichnet, dass** ein Passbolzen (9) oder Exzenterpassbolzen und ein Exzenterbolzen (10) pro Flansch (7) vorgesehen sind, die um ca. 180° Winkel auf dem Flansch (7) versetzt angeordnet sind.

4. Zapfenwälzlagerung, bei der Wälzkörper (3) auf einem Zapfen eines Zylinders (1) einer Druckmaschine, oder unter Zwischenschaltung eines Innenrings (2) auf diesem festgelegt sind, wobei die Wälzkörper (3) mit einem Außenring (4) oder unter Zwischenschaltung eines ebenfalls wälzgelagerten und exzentrisch ausgeführten Zwischenrings (5) mit dem Außenring (4) mit oder ohne Einfügung eines Lageraußenringes in Wirkverbindung stehen, wobei der Außenring (4) einen Flansch (7) aufweist und damit mit einer Maschinenseitenwand (8) in Kontakt steht, wobei der Flansch (7) Bohrungen für Schrauben (12) zur kraftschlüssigen Verbindung des Flansches (7) mit der Maschinenseitenwand (8) aufweist, die gegenüber den Schrauben (12) Einstellspiele aufweisen, **dadurch gekennzeichnet, dass** der Außenring (4) zylindrisch ausgeführt ist, dass der Außenring (4) oder der Flansch (7) gegenüber der Öffnung in der Maschinenseitenwand (8) Einstellspiele aufweisen und dass Verstellelemente mit zwei Exzenterbolzen (10) vorgesehen sind, die um ca. 90° Winkel versetzt auf dem Flansch (7) angeordnet sind, die einerseits mit Bohrungen in der Maschinenseitenwand (8) und andererseits mit Aussparungen im Flansch (7) des Außenringes (4) in Wirkverbindung stehen.

5. Zapfenwälzlagerung nach Anspruch 4, **dadurch gekennzeichnet, dass** zwischen den Exzenterbolzen (10) an Stellen des Flansches (7) Kegel-Passstifte (11) in Bohrungen im Flansch (7) und in der Maschinenseitenwand (8) einsetzbar sind.

## Claims

1. Anti-friction journal bearing, in which rolling bodies (3) are fixed on a journal of a cylinder (1) of a printing press, or on an inner ring (2) if the latter is positioned in between, the rolling bodies (3) being in an operative connection with an outer ring (4) or, if an intermediate ring (5) is positioned in between which is likewise roller-mounted and eccentrically configured, with the outer ring (4) with or without the insertion of a bearing outer ring, the outer ring (4) having a flange (7) and being in contact by way of the latter with a press side wall (8), the flange (7) having holes for screws (12) for the non-positive connection of the flange (7) to the press side wall (8), which holes have setting plays with respect to the screws (12), **characterized in that** the outer ring (4) is of cylindrical configuration, **in that** the outer ring (4) or the flange (7) have setting plays with respect to the opening in the press side wall (8), and **in that** adjusting elements are provided which have at least one eccentric bolt (10) which is in an operative connection firstly with holes in the press side wall (8) and secondly with cut-outs in the flange (7) of the outer ring (4), and **in that** at least one locating bolt (9) is provided which is arranged in locating holes of the flange (7) and the press side wall (8).

2. Anti-friction journal bearing according to Claim 1, **characterized in that** the locating bolts (9) are configured as eccentric locating bolts which are in an operative connection with corresponding locating holes in the flange (7) and in the press side wall (8).

3. Anti-friction journal bearing according to one of the preceding claims, **characterized in that** one locating bolt (9) or eccentric locating bolt and one eccentric bolt (10) are provided per flange (7), which are arranged offset on the flange (7) by an angle of approximately 180°.

4. Anti-friction journal bearing, in which rolling bodies (3) are fixed on a journal of a cylinder (1) of a printing press, or on an inner ring (2) if the latter is positioned in between, the rolling bodies (3) being in an operative connection with an outer ring (4) or, if an intermediate ring (5) is positioned in between which is likewise roller-mounted and eccentrically configured, with the outer ring (4) with or without the insertion of a bearing outer ring, the outer ring (4) having a flange (7) and being in contact by way of the latter with a press side wall (8), the flange (7) having holes for screws (12) for the non-positive connection of the flange (7) to the press side wall (8), which holes have setting plays with respect to the screws (12), **characterized in that** the outer ring is of cylindrical configuration, **in that** the outer ring (4) or the flange (7) have setting plays with respect to the opening in the press side wall (8), and **in that** adjusting elements are provided with two eccentric bolts (10) which are arranged on the flange (7) offset by an angle of approximately 90° and are in an operative connection firstly with holes in the press side wall (8) and secondly with cut-outs in the flange (7) of the outer ring (4).

5. Anti-friction journal bearing according to Claim 4, **characterized in that**, between the eccentric bolts (10) at locations of the flange (7), conical locating pins (11) can be inserted into holes in the flange (7) and in the press side wall (8).

## Revendications

1. Support sur palier à roulement pour tourillon, dans lequel des corps de roulement (3) sont fixés sur un tourillon d'un cylindre (1) d'une machine d'impression, ou par interposition d'une bague interne (2) sur celui-ci, les corps de roulement (3) étant en liaison fonctionnelle avec une bague externe (4) ou par interposition d'une bague intermédiaire (5) également supportée sur palier à roulement et réalisée de manière excentrique avec la bague externe (4) avec ou sans l'insertion d'une bague externe de palier, la bague externe (4) présentant une bride (7) et étant en contact par celle-ci avec une paroi latérale de machine (8), la bride (7) présentant des alésages pour des vis (12) pour la connexion par engagement par force de la bride (7) à la paroi latérale de machine (8), lesquels alésages présentent, par rapport aux vis (12), des jeux d'ajustement, **caractérisé en ce que** la bague externe (4) est réalisée sous forme cylindrique, **en ce que** la bague externe (4) ou la bride (7) présentent des jeux d'ajustement par rapport à l'ouverture dans la paroi latérale de machine (8), et **en ce que** des éléments de réglage sont prévus, lesquels présentent au moins un boulon excentrique (10) qui est en liaison fonctionnelle d'une part avec des alésages dans la paroi latérale de machine (8) et d'autre part avec des évidements dans la bride (7) de la bague externe (4), et **en ce qu'**au moins un boulon d'ajustement (9) est prévu, lequel est disposé dans des alésages d'ajustement de la bride (7) et la paroi latérale de machine (8).

2. Support sur palier à roulement pour tourillon selon la revendication 1, **caractérisé en ce que** les boulons d'ajustement (9) sont réalisés sous forme de boulons d'ajustement excentriques qui sont en liaison fonctionnelle avec des alésages d'ajustement correspondants dans la bride (7) et dans la paroi latérale de machine (8).

3. Support sur palier à roulement pour tourillon selon l'une quelconque des revendications précédentes, **caractérisé en ce qu'**un boulon d'ajustement (9) ou un boulon d'ajustement excentrique et un boulon excentrique (10) sont prévus pour chaque bride (7), lesquels sont disposés de manière décalée d'approximativement 180° sur la bride (7).

4. Support sur palier à roulement pour tourillon, dans lequel des corps de roulement (3) sont fixés sur un tourillon d'un cylindre (1) d'une machine d'impression, ou par interposition d'une bague interne (2) sur celui-ci, les corps de roulement (3) étant en liaison fonctionnelle avec une bague externe (4) ou par interposition d'une bague intermédiaire (5) également supportée sur palier à roulement et réalisée de manière excentrique avec la bague externe (4) avec ou sans l'insertion d'une bague externe de palier, la bague externe (4) présentant une bride (7) et étant en contact par celle-ci avec une paroi latérale de machine (8), la bride (7) présentant des alésages pour des vis (12) pour la connexion par engagement par force de la bride (7) à la paroi latérale de machine (8), lesquels alésages présentent, par rapport aux vis (12), des jeux d'ajustement, **caractérisé en ce que** la bague externe (4) est réalisée sous forme cylindrique, **en ce que** la bague externe (4) ou la bride (7) présentent des jeux d'ajustement par rapport à l'ouverture dans la paroi latérale de machine (8), et **en ce que** des éléments de réglage sont pourvus de deux boulons excentriques (10) qui sont disposés sur la bride (7) de manière décalée d'approximativement 90°, lesquels sont en liaison fonctionnelle d'une part avec des alésages dans la paroi latérale de machine (8) et d'autre part avec des évidements dans la bride (7) de la bague externe (4).

5. Support sur palier à roulement pour tourillon selon la revendication 4, **caractérisé en ce qu'**entre les boulons excentriques (10), au niveau d'endroits de la bride (7), des goupilles d'ajustement coniques (11) peuvent être insérées dans des alésages dans la bride (7) et dans la paroi latérale de machine (8).
